# EUROPÄISCHE PATENTSCHRIFT

(11) **EP 1 271 018 B1**
(45) Veröffentlichungstag und Bekanntmachung des Hinweises auf die Patenterteilung: **24.10.2012**
(21) Anmeldenummer: 02012760.1
(22) Anmeldetag: 08.06.2002
(51) Int. Cl.: F16J 15/08

(54) **Flachdichtung**
Gasket
Joint d'étanchéité plat

(30) Priorität: 29.06.2001 DE 10131643
(43) Veröffentlichungstag der Anmeldung: 02.01.2003
(73) Patentinhaber: ElringKlinger AG, 72581 Dettingen (DE)
(72) Erfinder: Walter, Gerhard, 72581 Dettingen (DE); Schumacher, Thomas, 72585 Riederich (DE)
(74) Vertreter: Hoeger, Stellrecht & Partner Patentanwälte

(56) Entgegenhaltungen:
- EP-A- 0 468 526
- EP-A- 0 834 687
- EP-A- 0 985 862
- US-A- 5 690 343
- US-A- 6 062 572

## Beschreibung

Die vorliegende Erfindung betrifft eine Flachdichtung, insbesondere eine Zylinderkopfdichtung, die mindestens eine Dichtungslage aus einem metallischen Material umfasst, welche eine Durchgangsöffnung und einen die Durchgangsöffnung umgebenden Randbereich aufweist.

Solche Flachdichtungen sind aus dem Stand der Technik bekannt.

Insbesondere ist beispielsweise aus der US-Patentschrift 4,721,315 eine Zylinderkopfdichtung bekannt, die eine Dichtungslage aus Metall umfasst, in welcher eine Brennraumdurchgangsöffnung ausgebildet ist. Die Brennraumdurchgangsöffnung ist von einer ringförmig geschlossenen Sicke umgeben, wobei die Höhe und/oder die Breite der Sicke längs des Umfangs variiert, um die im montierten Zustand der Dichtung auf dieselbe wirkende Dichtflächenpressung zu vergleichmäßigen und insbesondere Variationen der Flächenpressung aufgrund unterschiedlichen Abstandes von den Zylinderkopfschrauben auszugleichen.

Je nach dem für die gesickte metallische Dichtungsplatte verwendeten Material, der Dichtungskonstruktion und dem Durchmesser der Sicke ist es technisch schwierig oder gar unmöglich, eine dauerhafte Vergleichsmäßigung der Dichtflächenpressung zu erzeugen, da während des Motorbetriebs, bedingt durch hohe Temperaturen und dynamische Dichtspaltbewegungen, die Höhenprofilierung der Sicke reduziert wird, so dass keine dauerhafte Anpassung an konstruktive und toleranzbedingte Bauteilsteifigkeitsschwankungen erfolgen kann.

Die US-A-6 062 572 offenbart eine Zylinderkopfdichtung mit einer Sicke, die sich in der Umfangsrichtung einer Brennraumdurchgangsöffnung über einen Umfangswinkel von weniger als 360° erstreckt, wobei die Sicke mit einer *in situ* gebildeten Beschichtung aus einem Kunststoffmaterial, aus einer anorganischen Substanz, aus einem Metallpulver oder aus einem aus diesen Materialien zusammengesetzten Material gebildet ist.

Die EP 0 927 844 A2 offenbart eine Flachdichtung gemäß dem Oberbegriff von Anspruch 1.

Der vorliegenden Erfindung liegt die Aufgabe zugrunde, eine Flachdichtung der eingangs genannten Art zu schaffen, welche einfach aufgebaut und herzustellen ist und dennoch eine dauerhafte Vergleichmäßigung der auf die Dichtung im montierten Zustand wirkenden Flächenpressung ermöglicht.

Diese Aufgabe wird durch eine Flachdichtung nach Anspruch 1 gelöst.

Der erfindungsgemäßen Lösung liegt somit das Konzept zugrunde, die Flachdichtung partiell durch ein Auflageelement zu verdicken, wobei sich das Auflageelement nicht rings um die Durchgangsöffnung herum erstreckt, sondern nur über einen Teilbereich des Umfangs der Durchgangsöffnung, so dass die Flächenpressung in diesem Teilbereich selektiv erhöht wird und diese selektive Erhöhung der Flächenpressung im Motorbetrieb dauerhaft erhalten bleibt.

Zwar ist auch bei einer der in der US-Patentschrift 4,721,315 offenbarten Ausführungsformen einer Zylinderkopfdichtung vorgesehen, auf der konkaven Seite der die Brennraumdurchgangsöffnung umgebenden Sicke ein Element anzuordnen, welches sich nur über einen beschränkten Abschnitt des Umfangs der Brennraumdurchgangsöffnung erstreckt. Dieses zusätzliche Element dient aber lediglich der Erhöhung der Steifigkeit der Sicke, ohne dass die maximale Dicke, welche die Dichtung im montierten Zustand in dem Segment des Randbereichs der Brennraumdurchgangsöffnung aufweist, durch das sich das Element erstreckt, durch dieses Element erhöht wird. Vielmehr wird die maximale Dicke dieser aus der US-Patentschrift 4,721,315 bekannten Zylinderkopfdichtung durch zwei Abstandshalterringe bestimmt, welche unmittelbar am Rande der Brennraumdurchgangsöffnung zu beiden Seiten der Dichtungslage angeordnet sind und sich beide rings um die Brennraumdurchgangsöffnung herum erstrecken.

Durch das bei der erfindungsgemäßen Lösung vorgesehene Auflageelement kann jede lokale Erniedrigung der Flächenpressung, welche beispielsweise durch eine lokale Erniedrigung der Steifigkeit eines der an die Flachdichtung angrenzenden Bauteile oder durch einen großen Abstand von den die an der Flachdichtung anliegenden Bauteile miteinander verspannenden Befestigungselementen verursacht sein kann, ausgeglichen werden.

Um eine lokale Erniedrigung der Flächenpressung möglichst gezielt auszugleichen, ohne in benachbarten Bereichen eine Überkompensation zu bewirken, ist es von Vorteil, wenn das Auflageelement sich über einen Umfangswinkel von weniger als ungefähr 90°, vorzugsweise von weniger als ungefähr 30°, erstreckt.

Um das Auflageelement zusammen mit der Dichtungslage transportieren zu können und so die Montage der Flachdichtung zu vereinfachen, ist das Auflageelement an der Dichtungslage - bereits vor der Montage der Flachdichtung - festgelegt.

Dieses Festlegen kann beispielsweise durch Vernieten oder Kleben erfolgen.

Als besonders günstig hat es sich jedoch erwiesen, wenn das Auflageelement durch Schweißen, vorzugsweise durch Laserschweißen, an der Dichtungslage festgelegt ist.

Bei einer bevorzugten Ausgestaltung der Erfindung ist vorgesehen, daß das Auflageelement aus einem metallischen Material gebildet ist.

Um eine möglichst gute Anpassung des Auflageelements an das im montierten Zustand der Dichtung daran angrenzende Bauteil durch plastische Verformung des Auflageelement zu erreichen, wird das Auflageelement vorzugsweise aus einem Material gebildet, welches dieselbe Zugfestigkeit wie das Material der Dichtungslage oder eine geringere Zugfestigkeit aufweist.

Insbesondere bei Verwendung dünner Auflageelemente kann es jedoch von Vorteil sein, wenn das Auflageelement aus einem Material gebildet ist, welches eine höhere Zugfestigkeit aufweist als das Material der Dichtungslage. In diesem Fall wird das Auflageelement bei der Montage der Zylinderkopfdichtung als Ganzes in die Dichtungslage hineingedrückt, so daß ein Zerreißen des Auflageelements während der Montage auch bei geringer Dicke des Auflageelements vermieden wird.

Das bei der erfindungsgemäßen Flachdichtung verwendete Auflageelement eignet sich besonders gut zum Ausgleichen besonders hoher Variationen der auf die Dichtung wirkenden Flächenpressung.

Vorzugsweise ist daher vorgesehen, daß das Auflageelement zumindest teilweise eine Dicke von mindestens 50 µm aufweist, um besonders große lokale Erniedrigungen der Flächenpressung ausgleichen zu können.

Um die plastische Anpassungsfähigkeit des Auflageelements, welche insbesondere für den Ausgleich von Toleranzschwankungen im Betrieb der Flachdichtung von Bedeutung ist, möglichst genau einstellen zu können, ist bei einer bevorzugten Ausgestaltung der erfindungsgemäßen Flachdichtung vorgesehen, dass das Auflageelement mindestens einen höhenprofilierten Bereich aufweist.

Diese Höhenprofilierung kann bei der Montage der Zylinderkopfdichtung erzeugt werden.

Alternativ oder ergänzend hierzu kann auch vorgesehen sein, dass das Auflageelement bereits vor der Montage der Flachdichtung mit einer voreingestellten, beispielsweise durch Prägen erzeugten, Höhenprofilierung versehen ist.

Um die plastische Anpassungsfähigkeit des Auflageelements im höhenprofilierten Bereich zu erhöhen, kann vorgesehen sein, dass der höhenprofilierte Bereich mit mindestens einer Ausnehmung versehen ist. In diese Ausnehmung kann während der plastischen Verformung des Auflageelements Material aus den angrenzenden Bereichen des Auflageelements hineinfließen.

Wenn das Auflageelement einen im Wesentlichen parallel zu einem Rand der Durchgangsöffnung verlaufenden inneren Rand und mindestens einen sich an den inneren Rand anschließenden seitlichen Rand aufweist, so kann die plastische Anpassungsfähigkeit des Auflageelements dadurch erhöht werden, dass der innere Rand und der seitliche Rand miteinander einen von 90° verschiedenen Winkel einschließen.

In diesem Fall kann insbesondere vorgesehen sein, daß das Auflageelement über mindestens einen der Ränder der Sicke in einen ungesickten Bereich der Dichtungslage übersteht.

Vorzugsweise ist vorgesehen, daß das Auflageelement über beide Ränder der Sicke in ungesickte Bereiche der Dichtungslage übersteht.

Um die Steifigkeit der Flachdichtung weiter zu erhöhen, kann ferner vorgesehen sein, daß das Auflageelement mit einem gesickten Abschnitt versehen ist.

Wenn sowohl die Dichtungslage als auch das Auflageelement mit einer Sicke versehen sind, so ist vorteilhafterweise vorgesehen, daß das Auflageelement zusammen mit der Dichtungslage mit einer Sicke versehen worden ist. In diesem Fall wird für das Erzeugen der Sicken der Dichtungslage und des Auflageelements nur ein einziges Werkzeug benötigt.

Ferner ist es in diesem Fall möglich, das Auflageelement beim Einprägen der Sicke zugleich auch mit einer Höhenprofilierung zu versehen.

Um das Auflageelement vor dem Festlegen desselben an der Dichtungslage präzise relativ zu der Dichtungslage positionieren zu können, ist vorteilhafterweise vorgesehen, daß das Auflageelement mit mindestens einer Ausnehmung zum Positionieren des Auflageelements während des Festlegens des Auflageelements an der Dichtungslage versehen ist.

Die erfindungsgemäße Flachdichtung kann eine einzelne oder eine Mehrzahl von Dichtungslagen umfassen.

Wenn die Flachdichtung neben der Dichtungslage, an welcher das Auflageelement angeordnet ist, noch mindestens eine weitere Lage umfaßt, so ist vorzugsweise vorgesehen, daß das Auflageelement auf einer Seite der Dichtungslage angeordnet ist, welche einer anderen Lage der Flachdichtung zugewandt ist.

Wenn die Flachdichtung eine an der Durchgangsöffnung angeordnete Einfassung umfaßt, so ist vorzugsweise vorgesehen, daß das Anlageelement zwischen der Dichtungslage und der Einfassung angeordnet ist.

Weitere Merkmale und Vorteile der Erfindung sind Gegenstand der nachfolgenden Beschreibung und zeichnerischen Darstellung von Ausführungsbeispielen.

In den Zeichnungen zeigen:
- Fig. 1: eine Draufsicht auf eine einlagige Zylinderkopfdichtung mit einem Auflageelement;
- Fig. 2: einen Schnitt durch die Zylinderkopfdichtung mit dem Auflageelement aus Fig. 1 längs der Linie 2-2 in Fig. 1;
- Fig. 3: eine Draufsicht auf das Auflageelement der Zylinderkopfdichtung aus den Figuren 1 und 2;
- Fig. 4: einen schematischen Schnitt durch die Zylinderkopfdichtung mit dem Auflageelement aus Fig. 1 längs der Linie 4-4 in Fig. 1;
- Fig. 5: eine Draufsicht auf eine weitere Ausführungsform eines Auflageelements;
- Fig. 6: einen schematischen Schnitt durch eine nicht in den Schutzbereich der beigefügten Ansprüche fallende mehrlagige Zylinderkopfdichtung im Randbereich der Brennraumdurchgangsöffnung; und
- Fig. 7: einen schematischen Schnitt durch eine Zylinderkopfdichtung, die mit einer Brennraumeinfassung versehen ist, im Randbereich der Brennraumdurchgangsöffnung.

Gleiche oder funktional äquivalente Elemente sind in allen Figuren mit denselben Bezugszeichen bezeichnet.

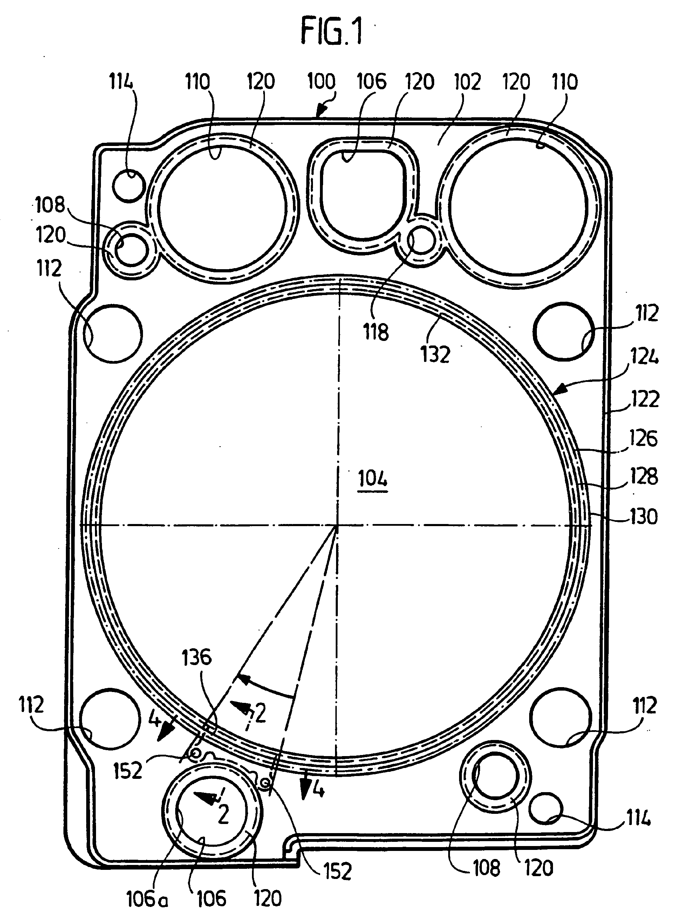

Eine in den Figuren 1 bis 4 dargestellte erste Ausführungsform einer als Ganzes mit 100 bezeichneten Zylinderkopfdichtung zur Anordnung zwischen einem Zylinderblock und einem Zylinderkopf eines Verbrennungsmotors umfasst eine im wesentlichen ebene Dichtungslage 102 aus einem metallischen Material, welche eine kreisförmige Brennraumdurchgangsöffnung 104 sowie Kühlmitteldurchgangsöffnungen 106, Schmiermitteldurchgangsöffnungen 108, Stößeldurchgangsöffnungen 110, Zylinderkopfschraubendurchgangsöffnungen 112, Positionierstiftdurchgangsöffnungen 114 und eine Entlüftungsdurchgangsöffnung 118 aufweist.

Die Kühlmitteldurchgangsöffnungen 106, die Schmiermitteldurchgangsöffnungen 108, die Stößeldurchgangsöffnungen 110 und die Entlüftungsdurchgangsöffnung 118 sind jeweils mit einer Dichtlippe 120 aus einem elastomeren Material, beispielsweise einem Gummimaterial, eingefasst.

Ferner ist die Dichtungslage 102 an ihrem äußeren Rand mit einem umlaufenden Wulst 122 aus einem elastomeren Material, beispielsweise einem Gummimaterial, versehen.

Die Brennraumdurchgangsöffnung 104 ist von einer in die Dichtungslage 102 eingeprägten Sicke 124 ringförmig umschlossen.

Die Sicke 124 ist als Vollsicke ausgebildet, mit einem zentralen Sickenkamm 126, einem der Brennraumdurchgangsöffnung 104 zugewandten inneren Sickenrand 128 und einem der Brennraumdurchgangsöffnung 104 abgewandten äußeren Sickenrand 130.

Im vorliegenden Ausführungsbeispiel ist die konvexe Seite der Sicke 124 im montierten Zustand der Zylinderkopfdichtung 100 dem (nicht dargestellten) Zylinderkopf und die konkave Seite der Sicke 124 dem (nicht dargestellten) Zylinderblock zugewandt. Die Orientierung der Sicke 124 könnte jedoch auch umgekehrt werden.

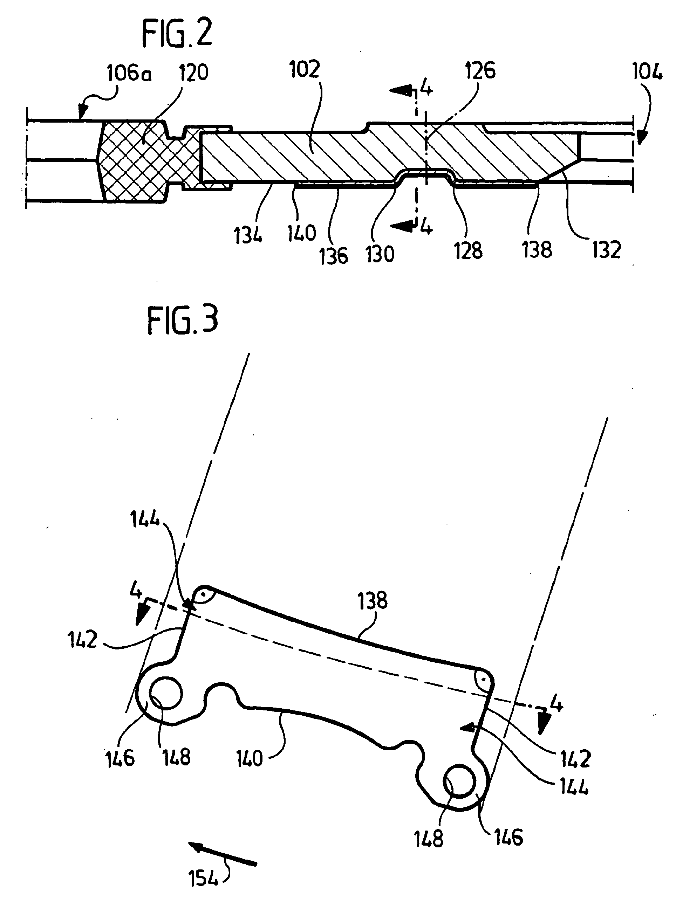

Wie am besten aus der Schnittdarstellung der Fig.2 zu ersehen ist, ist der Rand der Brennraumdurchgangsöffnung 104 mit einer umlaufenden Anschrägung 132 versehen.

An der dem Zylinderblock zugewandten Unterseite 134 der Dichtungslage 102 ist im Bereich zwischen einer der Kühlmitteldurchgangsöffnungen, welche im folgenden mit 106a bezeichnet wird, und der Brennraumdurchgangsöffnung 104 ein Auflageelement 136 angeordnet.

Das Auflageelement 136 ist durch Ausstanzen aus einem Metallblech gebildet und weist einen im wesentlichen parallel zum Rand der Brennraumdurchgangsöffnung 104 verlaufenden inneren Rand 138 (siehe Fig. 2 und 3), einen im wesentlichen parallel zum Rand der Kühlmitteldurchgangsöffnung 106 verlaufenden äußeren Rand 140 und zwei im wesentlichen radial zur Brennraumdurchgangsöffnung 104 verlaufende seitliche Ränder 142 auf.

Die beiden seitlichen Randbereiche 144 des Auflageelements 136 weisen jeweils einen Ansatz 146 auf, welcher mit einem Durchgangsloch 148 versehen ist.

Die Durchgangslöcher 148 dienen zur Aufnahme von Positionierstiften, mittels derer das Auflageelement 136 während des Festlegens des Auflageelements 136 an der Dichtungslage 102 relativ zu der Dichtungslage 102 positioniert wird.

Zu diesem Zweck weist die Dichtungslage 102 mehrere, beispielsweise zwei, zwischen der Kühlmitteldurchgangsöffnung 106a und der Brennraumdurchgangsöffnung 104 angeordnete Positionierungsdurchgangslöcher 152 auf, welche jeweils mit einem der Durchgangslöcher 148 des Auflageelements 136 fluchten.

Diese Positionierungsdurchgangslöcher 152 werden bei der Herstellung der Zylinderkopfdichtung 100 zusammen mit den übrigen Durchgangsöffnungen der Dichtungslage 102 ausgestanzt.

Nach dem Stanzvorgang, aber noch vor dem Einprägen der Sicke 124 in die Dichtungslage 102, wird das Auflageelement 136 an der Unterseite 134 der Dichtungslage 102 zur Anlage gebracht und mittels zwei Positionierungsstiften, welche die Positionierungsdurchgangslöcher 152 in der Dichtungslage 102 und die Durchgangslöcher 148 des Auflageelements 136 durchsetzen, in die gewünschte Lage relativ zu der Dichtungslage 102 gebracht und in dieser Lage durch Laserschweißung an der Unterseite 134 der Dichtungslage 102 festgelegt.

Anschließend werden die Positionierungsstifte aus den Positionierungsdurchgangslöchern 152 entfernt, und die Sicke 124 wird der Dichtungslage 102 eingeprägt, wobei zugleich auch das Auflageelement 136 mit einem gesickten Abschnitt versehen wird.

Die Schweißnaht, durch welche das Auflageelement 136 mit der Dichtungslage 102 verbunden ist, folgt dem Sickenkamm 126.

Wie am besten aus der Draufsicht der Figur 1 zu ersehen ist, erstreckt sich das Auflageelement 136 längs der Umfangsrichtung 154 der Brennraumdurchgangsöffnung 104 über einen Umfangswinkel von ungefähr 20°.

Das Auflageelement 136 weist eine im wesentlichen konstante Dicke von ungefähr 70 um auf. Die Dicke der Dichtungslage 102, welche aus einem Trägerblech mit einer Stärke von beispielsweise ungefähr 1,25 mm gebildet ist, wird somit in dem von dem Auflageelement 136 überdeckten Bereich lokal erhöht.

Durch diese lokale Erhöhung der Dicke der Dichtungslage 102 wird die auf die Zylinderkopfdichtung 100 wirkende Flächenpressung im Bereich des Auflageelements 136 im montierten Zustand der Zylinderkopfdichtung 100 erhöht.

Hierdurch kann eine lokale Erniedrigung der Steifigkeit der an die Zylinderkopfdichtung 100 angrenzenden Bauteile, beispielsweise aufgrund eines im Zylinderkopf vorgesehenen Kühlmittelkanals, kompensiert werden, so daß die auf die Zylinderkopfdichtung 100 wirkende Flächenpressung im Randbereich der Brennraumdurchgangsöffnung 104 vergleichmäßigt wird.

Wie am besten aus Fig. 2 zu ersehen ist, überdeckt das Auflageelement 136 die konkave Seite der Sicke 124 und erstreckt sich in radialer Richtung sowohl über den äußeren Sickenrand 130 als auch über den inneren Sickenrand 128 hinaus in ungesickte Bereiche der Dichtungslage 102.

Der innere Rand 138 des Auflageelements 136 fällt mit dem äußeren Rand der Anschrägung 132 zusammen, so daß das Auflageelement 136 vom Rand der Brennraumdurchgangsöffnung 104 beabstandet ist.

Die maximale Dicke, welche die Zylinderkopfdichtung 100 im montierten Zustand in dem Segment des Randbereichs der Brennraumdurchgangsöffnung 104 ausweist, durch welches sich das Auflageelement 136 hindurch erstreckt, wird durch die Dicke des Trägerblechs der Dichtungslage 102 und die Dicke des Auflageelements 136 bestimmt.

Dadurch, daß auch das Auflageelement 136 mit einem Sickenabschnitt versehen ist, wird die Steifigkeit dieses Bereichs der Zylinderkopfdichtung 100 weiter erhöht.

Um eine möglichst gute Anpassung des Auflageelements 136 an das im montierten Zustand der Dichtung daran angrenzende Bauteil durch plastische Verformung des Auflageelements 136 zu erreichen, wird das Auflageelement 136 aus einem Material hergestellt, welches dieselbe Zugfestigkeit oder eine geringere Zugfestigkeit als das Material des Trägerblechs der Dichtungslage 102 aufweist.

Wird beispielsweise ein Trägerblech aus dem Edelstahl 1.4301, der auf eine Zugfestigkeit von 650 N/mm² eingestellt ist, verwendet, so wird das Auflageelement beispielsweise aus dem kalt gewalzten Stahl mit der Bezeichnung 1.0338 und einer Zugfestigkeit im Bereich von ungefähr 290 N/mm² bis ungefähr 370 N/mm² hergestellt.

Durch die geringere Zugfestigkeit des Materials des Auflageelements 136 wird dasselbe bereits bei der Montage der Zylinderkopfdichtung 100 so plastisch verformt, daß die Dicke des Auflageelements 136 von dessen Rändern her allmählich bis zu der maximalen Dicke ansteigt, so daß eine Vergleichmäßigung der Flächenpressung erzielt wird.

Insbesondere bei Verwendung dünner Auflageelemente 136 kann es jedoch auch von Vorteil sein, das Auflageelement 136 aus einem Material herzustellen, welches eine höhere Zugfestigkeit als das Trägerblech der Dichtungslage 102 aufweist. So kann beispielsweise als Material für das Auflageelement 136 der Stahl mit der Bezeichnung 1.4310 mit einer Zugfestigkeit von beispielsweise ungefähr 1500 N/mm² verwendet werden. Durch die Verwendung eines Auflageelements 136 aus einem Material, das eine höhere Zugfestigkeit aufweist als das Material des Trägerblechs, wird das Auflageelement 136 bei der Montage der Zylinderkopfdichtung 100 als Ganzes in das Trägerblech hineingedrückt, so daß ein Zerreißen des Auflageelements 136 während der Montage auch bei geringer Dicke des Auflageelements 136 vermieden wird.

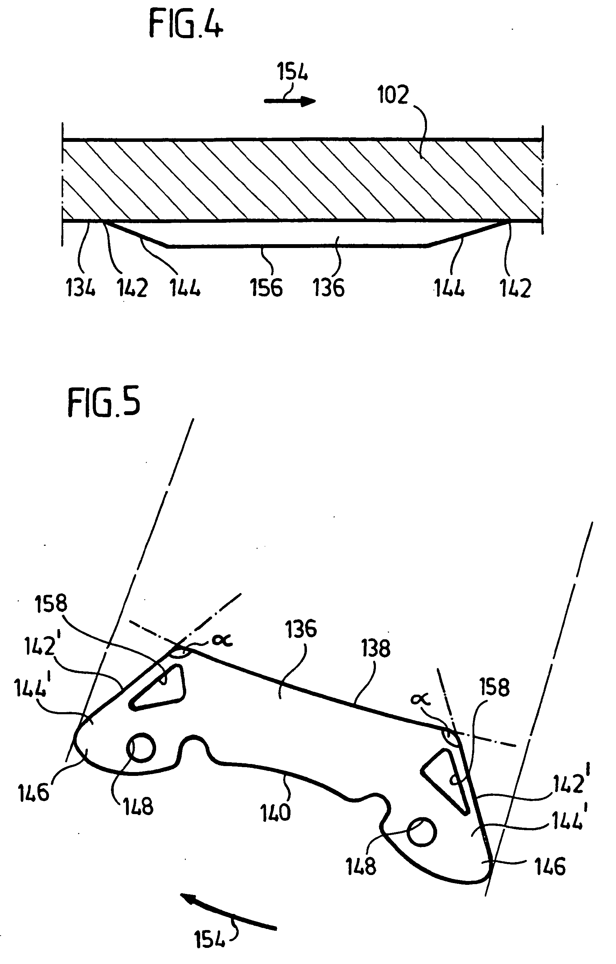

Wie am besten aus dem schematischen Schnitt durch die Dichtungslage 102 längs der Umfangsrichtung 154 der Brennraumdurchgangsöffnung 104, welcher in Fig. 4 dargestellt ist, zu ersehen ist, weist das Auflageelement 136 im montierten Zustand der Zylinderkopfdichtung 100 eine Höhenprofilierung auf, wobei die Dicke des Auflageelements 136 in dessen seitlichen Randbereichen 144 von den seitlichen Rändern 142 her zu einem zentralen Plateaubereich 156 des Auflageelements 136 hin kontinuierlich zunimmt, so daß die seitlichen Randbereiche 144 einen rampenförmigen Querschnitt aufweisen. (Das Auflageelement 13b ist in Fig. 4 zu Erläuterungszwecken stark überhöht dargestellt.)

Diese Höhenprofilierung des Auflageelements 136 dient der Vergleichmäßigung der auf die Zylinderkopfdichtung 100 im montierten Zustand wirkenden Flächenpressung.

Diese Höhenprofilierung kann bei der Montage der Zylinderkopfdichtung 100 zwischen dem Zylinderblock und dem Zylinderkopf durch plastische Verformung der Randbereiche des Auflageelements 136 erzeugt werden, wenn das gegen das Auflageelement 136 anliegende Bauteil (im vorliegenden Beispiel der Zylinderblock) mit einer komplementären Höhenprofilierung versehen ist, so daß sich das Auflageelement 136 beim Verspannen der beiden abzudichtenden Bauteile gegeneinander an diese Höhenprofilierung des am Auflageelement 136 anliegenden Bauteils anpaßt.

Alternativ oder ergänzend hierzu kann jedoch auch vorgesehen sein, daß das Auflageelement 136 bereits vor der Montage der Zylinderkopfdichtung 100 mit einer voreingestellten Höhenprofilierung versehen ist.

Diese voreingestellte Höhenprofilierung kann durch entsprechendes Prägen des Auflageelements 136 erzeugt werden.

Das Einprägen des Höhenprofils an dem Auflageelement 136 kann wiederum vor oder nach dem Festlegen des Auflageelements 136 an der Dichtungslage 102 erfolgen.

Erfolgt das Aufprägen der Höhenprofilierung nach der Festlegung an der Dichtungslage 102, so hat dies den Vorteil, daß das Einprägen der Höhenprofilierung gleichzeitig mit dem Einprägen der Sicke 124 in die Dichtungslage 102 erfolgen kann.

Eine in Fig. 5 dargestellte zweite Ausführungsform einer Zylinderkopfdichtung 100 unterscheidet sich von der vorstehend beschriebenen ersten Ausführungsform lediglich durch die Ausgestaltung der seitlichen Randbereiche 144' des Auflageelements 136.

Wie aus Fig. 5 zu ersehen ist, sind die seitlichen Ränder 142' des Auflageelements 136 der zweiten Ausführungsform nicht im wesentlichen radial zu der Brennkammerdurchgangsöffnung 104 ausgerichtet. Vielmehr verlaufen die seitlichen Ränder 142' so, daß sie mit dem inneren Rand 138 des Auflageelements 136 jeweils einen stumpfen Winkel α einschließen. Dadurch, daß die seitlichen Ränder 142' mit dem inneren Rand 138 des Auflageelements 136 einen von 90° verschiedenen Winkel einschließen, wird die plastische Verformung der seitlichen Randbereiche 144' (während der Montage der Zylinderkopfdichtung 100 zwischen Zylinderkopf und Zylinderblock und/oder bei einem separaten Prägevorgang vor der Montage der Zylinderkopfdichtung 100) erleichtert.

Ferner sind die seitlichen Randbereiche 144' des Auflageelements 136 mit Ausnehmungen 158 versehen, welche ebenfalls die plastische Verformung der seitlichen Randbereiche 144 erleichtern, da in diese Ausnehmungen 158 während der plastischen Verformung Material aus den angrenzenden Bereichen des Auflageelements 136 hineinfließen kann.

Die Ausnehmungen 158 können sich dabei durch die gesamte Dicke des Auflageelements 136 oder nur durch einen Teilbereich der Dicke des Auflageelements 136 hindurch erstrecken.

Im übrigen stimmt die zweite Ausführungsform einer Zylinderkopfdichtung 100 hinsichtlich Aufbau und Funktion mit der ersten Ausführungsform überein, auf deren vorstehende Beschreibung insoweit Bezug genommen wird.

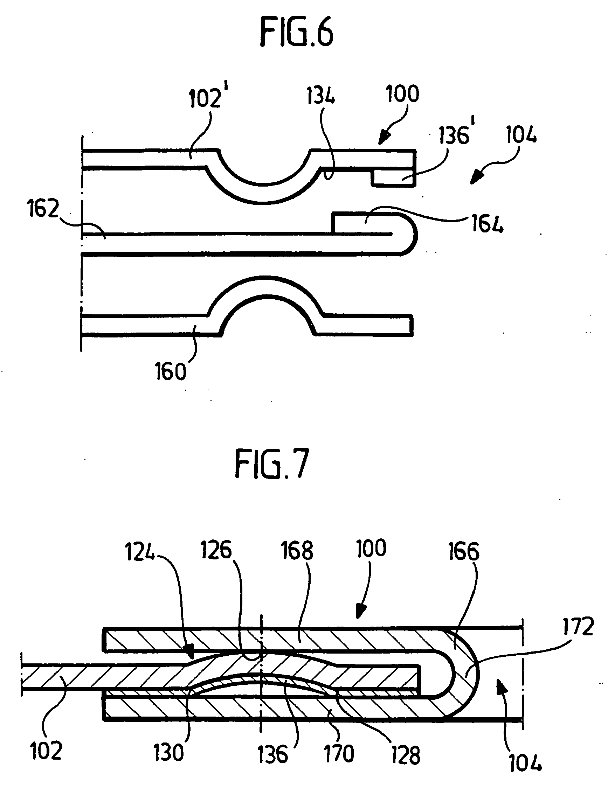

Eine in Fig. 6 dargestellte dritte Ausführungsform einer Zylinderkopfdichtung 100 unterscheidet sich von der vorstehend beschriebenen ersten Ausführungsform dadurch, daß die Zylinderkopfdichtung 100 mehrlagig ausgebildet ist und zwei gesickte Decklagen 102', 160 und eine dazwischen angeordnete Mittellage 162 umfaßt.

Die Mittellage 162 weist einen die Brennkammerdurchgangsöffnung 104 ringförmig umgebenden Stopper 164 auf, welcher dadurch gebildet ist, daß der Rand der Mittellage 162 auf die Mittellage 162 zurückgebogen worden ist.

Die der Mittellage 162 zugewandte Unterseite 134 der oberen Decklage 102' ist mit einem dem Stopper 164 gegenüberliegenden Auflageelement 136' versehen, welches sich in der Umfangsrichtung der Brennraumdurchgangsöffnung 104 über einen Umfangswinkel von weniger als 360°, beispielsweise über einen Umfangswinkel von 20°, erstreckt.

Die maximale Dicke, welche die Zylinderkopfdichtung 100 im montierten Zustand in dem Segment des Randbereichs der Brennraumdurchgangsöffnung 104 aufweist, durch das sich das Auflageelement 136' erstreckt, wird durch die Summe der Dicken des Trägerblechs der oberen Decklage 102', des Auflageelements 136', der Mittellage 162 mit dem Stopper 164 und der unteren Decklage 160 bestimmt. Durch das Auflageelement 136' wird die Dicke der Zylinderkopfdichtung 100 im montierten Zustand somit lokal erhöht, so daß auf diese Weise eine geringere Steifigkeit der an die Dichtung angrenzenden Bauteile ausgeglichen und eine Vergleichmäßigung der auf die Zylinderkopfdichtung 100 wirkenden Flächenpressung erzielt werden kann.

Wie aus Fig. 6 zu ersehen ist, grenzt das Auflageelement 136' unmittelbar an den Rand der Brennraumdurchgangsöffnung 104 an.

Ferner ist das Auflageelement 136' vollständig im nicht gesickten Bereich der oberen Decklage 102' angeordnet.

Im übrigen kann das Auflageelement 136' der dritten Ausführungsform in derselben Weise ausgebildet sein und hergestellt werden wie die Auflageelemente bei der ersten und der zweiten Ausführungsform, auf deren vorstehende Beschreibung insoweit Bezug genommen wird.

Eine in Fig. 7 dargestellte vierte Ausführungsform einer Zylinderkopfdichtung 100 unterscheidet sich von der vorstehend beschriebenen ersten Ausführungsform dadurch, daß die Zylinderkopfdichtung 100 als zusätzliches Element eine Brennraumeinfassung 166 umfaßt, welche den die Brennraumdurchgangsöffnung 104 umgebenden Randbereich der Dichtungslage 102 von beiden Seiten umschließt und sich rings um die Brennraumdurchgangsöffnung erstreckt.

Wie aus Fig. 7 zu ersehen ist, weist die Brennraumeinfassung 166 einen U-förmigen Querschnitt auf, mit einem oberen Schenkel 168, dessen Innenseite an dem Sickenkamm 126 der die Brennraumdurchgangsöffnung 104 umschließenden Sicke 124 anliegt, und mit einem unteren Schenkel 170, dessen Innenseite an dem inneren Sickenrand 128 und an dem äußeren Sickenrand 130 der Sicke 124 anliegt.

Wie ferner aus Fig. 7 zu ersehen ist, liegt der untere Schenkel 170 der Brennraumeinfassung 166 in dem Segment des Randbereichs, durch das sich das Auflageelement 136 erstreckt, an der dem Trägerblech der Dichtungslage 102 abgewandten Unterseite des Auflageelements 136 an.

Der den unteren Schenkel 170 der Brennraumeinfassung 166 mit deren oberem Schenkel 168 verbindende gekrümmte Bereich 172 der Brennraumeinfassung 166 überdeckt den der Brennraumdurchgangsöffnung 104 zugewandten freien Rand der Dichtungslage 102.

Im übrigen kann das Auflageelement 136 der vierten Ausführungsform in derselben Weise ausgebildet sein und hergestellt werden wie die Auflageelemente bei der ersten bis dritten Ausführungsform, auf deren vorstehende Beschreibung insoweit Bezug genommen wird.

Bei einer Variante der vierten Ausführungsform kann vorgesehen sein, daß die Zylinderkopfdichtung 100 mehrlagig ausgebildet ist und die Brennraumeinfassung 166 mehrere Dichtungslagen umschließt, von denen mindestens eine mit einem Auflageelement versehen ist.

## Patentansprüche

1. Flachdichtung, insbesondere Zylinderkopfdichtung, umfassend mindestens eine Dichtungslage (102) aus einem metallischen Material, welche eine Durchgangsöffnung (104) und einen die Durchgangsöffnung umgebenden Randbereich aufweist,
wobei die Dichtungslage (102) mit mindestens einem Auflageelement (136) versehen ist, das separat von der Dichtungslage (102) gebildet, anschließend an der Dichtungslage (102) positioniert und an der Dichtungslage (102) festgelegt ist, in dem Randbereich der Durchgangsöffnung angeordnet ist und sich in der Umfangsrichtung (154) der Durchgangsöffnung über einen Umfangswinkel von weniger als 360° erstreckt, wobei die maximale Dicke, welche die Flachdichtung (100) im montierten Zustand in dem Segment des Randbereichs aufweist, durch das sich das Auflageelement (136) erstreckt, durch das Auflageelement (136) erhöht wird,
**dadurch gekennzeichnet,**
**dass** die Dichtungslage (102) eine die Durchgangsöffnung (104) umgebende Sicke (124) aufweist und dass das Auflageelement (136) zumindest teilweise im gesickten Bereich der Dichtungslage (102) angeordnet ist.

2. Flachdichtung nach Anspruch 1, **dadurch gekennzeichnet, dass** das Auflageelement (136) sich über einen Umfangswinkel von weniger als ungefähr 90°, vorzugsweise von weniger als ungefähr 30°, erstreckt.

3. Flachdichtung nach einem der Ansprüche 1 oder 2, **dadurch gekennzeichnet, dass** das Auflageelement (136) durch Schweißen, vorzugsweise durch Laserschweißen, an der Dichtungslage (102) festgelegt ist.

4. Flachdichtung nach einem der Ansprüche 1 bis 3, **dadurch gekennzeichnet, dass** das Auflageelement (136) aus einem metallischen Material gebildet ist.

5. Flachdichtung nach einem der Ansprüche 1 bis 4, **dadurch gekennzeichnet, dass** das Auflageelement (136) aus einem Material gebildet ist, welches dieselbe Zugfestigkeit wie das Material der Dichtungslage (102) oder eine geringere Zugfestigkeit aufweist.

6. Flachdichtung nach einem der Ansprüche 1 bis 5, **dadurch gekennzeichnet, dass** das Auflageelement (136) aus einem Material gebildet ist, welches eine höhere Zugfestigkeit aufweist als das Material der Dichtungslage (102).

7. Flachdichtung nach einem der Ansprüche 1 bis 6, **dadurch gekennzeichnet, dass** das Auflageelement (136) zumindest teilweise eine Dicke von mindestens ungefähr 50 µm aufweist.

8. Flachdichtung nach einem der Ansprüche 1 bis 7, **dadurch gekennzeichnet, dass** das Auflageelement (136) mindestens einen höhenprofilierten Bereich (144) aufweist.

9. Flachdichtung nach Anspruch 8, **dadurch gekennzeichnet, dass** der höhenprofilierte Bereich (144) mit mindestens einer Ausnehmung (158) versehen ist.

10. Flachdichtung nach einem der Ansprüche 1 bis 9, **dadurch gekennzeichnet, dass** das Auflageelement (136) einen im Wesentlichen parallel zu einem Rand der Durchgangsöffnung (104) verlaufenden inneren Rand (138) und mindestens einen sich an den inneren Rand (138) anschließenden seitlichen Rand (142') aufweist, wobei der innere Rand und der seitliche Rand miteinander einen von 90° verschiedenen Winkel einschließen.

11. Flachdichtung nach einem der Ansprüche 1 bis 10, **dadurch gekennzeichnet, dass** das Auflageelement (136) über mindestens einen der Ränder der Sicke (124) in einen ungesickten Bereich der Dichtungslage (102) übersteht.

12. Flachdichtung nach Anspruch 11, **dadurch gekennzeichnet, dass** das Auflageelement (136) über beide Ränder der Sicke (124) in ungesickte Bereiche der Dichtungslage (102) übersteht.

13. Flachdichtung nach einem der Ansprüche 1 bis 12, **dadurch gekennzeichnet, dass** das Auflageelement (136) mit einem gesickten Abschnitt versehen ist.

14. Flachdichtung nach Anspruch 13, **dadurch gekennzeichnet, dass** das Auflageelement (136) zusammen mit der Dichtungslage (102) mit einer Sicke (124) versehen worden ist.

15. Flachdichtung nach einem der Ansprüche 1 bis 14, **dadurch gekennzeichnet, dass** das Auflageelement (136) mit mindestens einer Ausnehmung (148) zum Positionieren des Auflageelements (136) während des Festlegens des Auflageelements an der Dichtungslage (102) versehen ist.

16. Flachdichtung nach einem der Ansprüche 1 bis 15, **dadurch gekennzeichnet, dass** die Flachdichtung (100') mehrere Lagen (102', 160, 162) umfasst und dass das Auflageelement (136') auf einer Seite der Dichtungslage (102') angeordnet ist, welche einer anderen Lage (162) der Flachdichtung zugewandt ist.

17. Flachdichtung nach einem der Ansprüche 1 bis 16, **dadurch gekennzeichnet, dass** die Flachdichtung (100) eine an der Durchgangsöffnung (104) angeordnete Einfassung (166) umfasst und dass das Auflageelement (136) zwischen der Dichtungslage (102) und der Einfassung (166) angeordnet ist.

## Claims

1. A flat seal, in particular a cylinder head gasket, comprising at least one sealing layer (102) made of a metallic material, which has a through-opening (104) and an edge region surrounding the through-opening, wherein the sealing layer (102) is provided with at least one support element (136), which is formed separately from the sealing layer (102), then positioned on the sealing layer (102) and fixed to the sealing layer (102), is arranged in the edge region of the through-opening and extends in the peripheral direction (154) of the through-opening over a peripheral angle of less than 360°, the maximum thickness, which the flat seal (100) has in the assembled state in the segment of the edge region, through which the support element (136) extends, being increased by the support element (136), **characterised in that** the sealing layer (102) has a bead (124) surrounding the through-opening (104) and **in that** the support element (136) is at least partially arranged in the beaded region of the sealing layer (102).

2. A flat seal according to claim 1, **characterised in that** the support element (136) extends over a peripheral angle of less than about 90°, preferably of less than about 30°.

3. A flat seal according to either of claims 1 or 2, **characterised in that** the support element (136) is fixed by welding, preferably by laser welding, on the sealing layer (102).

4. A flat seal according to any one of claims 1 to 3, **characterised in that** the support element (136) is formed from a metallic material.

5. A flat seal according to any one of claims 1 to 4 **characterised in that** the support (136) is formed from a material, which has the same tensile strength as the material of the sealing layer (102) or a lower tensile strength.

6. A flat seal according to any one of claims 1 to 5, **characterised in that** the support element (136) is formed from a material, which has a higher tensile strength than the material of the sealing layer (102).

7. A flat seal according to any one of claims 1 to 6, **characterised in that** the support element (136) at least in part has a thickness of at least about 50 µm.

8. A flat seal according to any one of claims 1 to 7, **characterised in that** the support element (136) has at least one height-profiled region (144).

9. A flat seal according to claim 8, **characterised in that** the height-profiled region (144) is provided with at least one cut-out (158).

10. A flat seal according to any one of claims 1 to 9, **characterised in that** the support element (136) has an inner edge (138) running substantially parallel to an edge of the through-opening (104) and at least one lateral edge (142') adjoining the inner edge (138), the inner edge and the lateral edge enclosing with one another an angle that is different from 90°.

11. A flat seal according to any one of claims 1 to 10, **characterised in that** the support element (136) projects beyond at least one of the edges of the bead (124) into an unbeaded region of the sealing layer (102).

12. A flat seal according to claim 11, **characterised in that** the support element (136) projects beyond both edges of the bead (124) into unbeaded regions of the sealing layer (102).

13. A flat seal according to any one of claims 1 to 12, **characterised in that** the support element (136) is provided with a beaded portion.

14. A flat seal according to claim 13, **characterised in that** the support element (136) has been provided with a bead (124) together with the sealing layer (102).

15. A flat seal according to any one of claims 1 to 14, **characterised in that** the support element (136) is provided with at least one cut-out (148) for positioning the support element (136) during the fixing of the support element on the sealing layer (102).

16. A flat seal according to any one of claims 1 to 15, **characterised in that** the flat seal (100') comprises a plurality of layers (102', 160, 162) and **in that** the support element (136') is arranged on a side of the sealing layer (102'), which faces another layer (162) of the flat seal.

17. A flat seal according to any one of claims 1 to 16, **characterised in that** the flat seal (100) comprises an edging (166) arranged on the through-opening (104) and **in that** the support element (136) is arranged between the sealing layer (102) and the edging (166).

## Revendications

1. Joint d'étanchéité plat, en particulier joint de culasse de cylindre, comprenant au moins une couche d'étanchéité (102) constituée d'un matériau métallique, laquelle présente une ouverture de passage (104) et une zone de bordure entourant l'ouverture de passage,
la couche d'étanchéité (102) étant pourvue d'au moins un élément d'appui (136), formé séparément de la couche d'étanchéité (102), puis mis en place contre la couche d'étanchéité (102) et fixé contre la couche d'étanchéité (102), disposé dans la zone de bordure de l'ouverture de passage et s'étendant dans la direction périphérique (154) de l'ouverture de passage sur un angle circonférentiel inférieur à 360°, l'épaisseur maximale présentée par le joint d'étanchéité plat (100) en état de montage dans le segment de la zone de bordure au travers duquel s'étend l'élément d'appui (136), étant augmentée par l'élément d'appui (136),
**caractérisé en ce que**
la couche d'étanchéité (102) présente une moulure (124) entourant l'ouverture de passage (104), et **en ce que** l'élément d'appui (136) est au moins partiellement disposé dans la zone à moulure de la couche d'étanchéité (102).

2. Joint d'étanchéité plat selon la revendication 1, **caractérisé en ce que** l'élément d'appui (136) s'étend sur un angle circonférentiel inférieur à 90° environ, de préférence inférieur à 30° environ.

3. Joint d'étanchéité plat selon la revendication 1 ou la revendication 2, **caractérisé en ce que** l'élément d'appui (136) est fixé par soudage, de préférence par soudage laser sur la couche d'étanchéité (102).

4. Joint d'étanchéité plat selon l'une des revendications 1 à 3, **caractérisé en ce que** l'élément d'appui (136) est constitué d'un matériau métallique.

5. Joint d'étanchéité plat selon l'une des revendications 1 à 4, **caractérisé en ce que** l'élément d'appui (136) est constitué d'un matériau qui présente la même résistance à la traction que le matériau de la couche d'étanchéité (102), ou une résistance à la traction inférieure.

6. Joint d'étanchéité plat selon l'une des revendications 1 à 5, **caractérisé en ce que** l'élément d'appui (136) est constitué d'un matériau qui présente une résistance à la traction supérieure à celle du matériau de la couche d'étanchéité (102).

7. Joint d'étanchéité plat selon l'une des revendications 1 à 6, **caractérisé en ce que** l'élément d'appui (136) présente au moins partiellement une épaisseur minimale de 50 µm environ.

8. Joint d'étanchéité plat selon l'une des revendications 1 à 7, **caractérisé en ce que** l'élément d'appui (136) comporte au moins une zone (144) profilée en hauteur.

9. Joint d'étanchéité plat selon la revendication 8, **caractérisé en ce que** la zone (144) profilée en hauteur est pourvue d'au moins un évidement (158).

10. Joint d'étanchéité plat selon l'une des revendications 1 à 9, **caractérisé en ce que** l'élément d'appui (136) présente un bord intérieur (138) s'étendant sensiblement parallèlement à un bord de l'ouverture de passage (104), et au moins un bord latéral (142') attenant au bord intérieur (138), le bord intérieur et le bord latéral formant un angle différent de 90°.

11. Joint d'étanchéité plat selon l'une des revendications 1 à 10, **caractérisé en ce que** l'élément d'appui (136) dépasse d'au moins un des bords de la moulure (124) vers une zone exempte de moulure de la couche d'étanchéité (102).

12. Joint d'étanchéité plat selon la revendication 11, **caractérisé en ce que** l'élément d'appui (136) dépasse des deux bords de la moulure (124) vers des zones exemptes de moulure de la couche d'étanchéité (102).

13. Joint d'étanchéité plat selon l'une des revendications 1 à 12, **caractérisé en ce que** l'élément d'appui (136) est pourvu d'une partie avec moulure.

14. Joint d'étanchéité plat selon la revendication 13, **caractérisé en ce que** l'élément d'appui (136) ainsi que la couche d'étanchéité (102) ont été pourvus d'une moulure (124).

15. Joint d'étanchéité plat selon l'une des revendications 1 à 14, **caractérisé en ce que** l'élément d'appui (136) est pourvu d'au moins un évidement (148) pour le positionnement de l'élément d'appui (136) pendant la fixation de l'élément d'appui sur la couche d'étanchéité (102).

16. Joint d'étanchéité plat selon l'une des revendications 1 à 15, **caractérisé en ce que** ledit joint d'étanchéité plat (100') comprend plusieurs couches (102', 160, 162), et **en ce que** l'élément d'appui (136') est disposé sur une face de la couche d'étanchéité (102') qui est opposée à une autre couche (162) du joint d'étanchéité plat.

17. Joint d'étanchéité plat selon l'une des revendications 1 à 16, **caractérisé en ce que** ledit joint d'étanchéité plat (100) comprend une bordure (166) disposée contre l'ouverture de passage (104), et **en ce que** l'élément d'appui (136) est disposé entre la couche d'étanchéité (102) et la bordure (166).
